# EUROPÄISCHE PATENTSCHRIFT

(11) **EP 0 590 098 B1**
(45) Veröffentlichungstag und Bekanntmachung des Hinweises auf die Patenterteilung: **26.03.1997**
(21) Anmeldenummer: 93900007.1
(22) Anmeldetag: 29.05.1992
(51) Int. Cl.: E04B 1/90, C04B 7/52, C04B 41/50, E04F 13/04

(54) **MINERALWOLLE-FORMKÖRPER**
MINERAL WOOL MOULDING
CORPS MOULES EN LAINE MINERALE

(30) Priorität: 12.06.1991 DE 4119353
(43) Veröffentlichungstag der Anmeldung: 06.04.1994
(73) Patentinhaber: Deutsche Rockwool Mineralwoll-GmbH, 45966 Gladbeck (DE)
(72) Erfinder: KLOSE, Gerd-Rüdiger, D-4270 Dorsten 19 (DE)
(74) Vertreter: Köhne, Friedrich, Dipl.-Ing.
(86) Internationale Anmeldenummer: EP9201199
(87) Internationale Veröffentlichungsnummer: WO9222715

(56) Entgegenhaltungen:
- EP-A- 0 251 544
- DE-A- 3 444 881
- DE-A- 3 942 338
- FR-A- 1 480 832
- FR-A- 2 396 133
- US-A- 4 841 705
- US-A- 5 071 484
- CHEMICAL ABSTRACTS, vol. 110, no. 11, 29. Mai 1989, Columbus, Ohio, US; abstract no. 198247s, TOBA + KUROSAKI 'LIGHTWEIGHT INORGANIC FIBER BOARDS WITH HARD SURFACE LAYERS'

## Beschreibung

Die Erfindung bezieht sich auf einen Mineralwolle-Formkörper zur Wärme- und/oder Schalldämmung von Gebäudeaußenwänden, der zur Befestigung an der Gebäudeaußenwand einerseits und als Putzträger für die Aufnahme eines Außenputzes andererseits bestimmt ist und welcher eine Rohdichte von etwa 100 kg/m³ bis 150 kg/m³ und eine offene Porösität von etwa 87 Volumen-% bis 96 Volumen-% aufweist.

Mineralwolle-Dämmstoffe, wie z. B. insbesondere Steinwolle-Dämmstoffe, bestehen aus glasig erstarrten monofilen, d. h. einfachen Fasern, die im allgemeinen mit Phenol-Formaldehydharzen gebunden sind. Durch den Zusatz geringer Mengen Mineralöle, Öl-in-Wasser-Emulsionen oder Silikonöle, Silikonharze-Wasser-Emulsionen oder Silikonöle, Silikonharze allein oder in Kombination werden die Oberflächen der Fasern dauerhaft hydrophobiert, d. h. wasserabstoßend gemacht.

Die Hydrophobierung der Fasern ist notwendig, damit der beim Gebrauch der Mineralwolle- insbesondere Steinwolle-Dämmstoffe hindurchdiffundierende Wasserdampf nicht in dem Dämmstoff als Tauwasser ausfallen und somit das Dämmvermögen wesentlich verschlechtern kann. Die wasserabweisende Imprägnierung der Fasern ist weiterhin erforderlich, damit die Fasermasse nicht im Kontakt mit flüssigem Wasser dieses kapillaraktiv aufnimmt.

Mineralwolle-Formkörper, insbesondere Steinwolle-Formkörper, werden in der Praxis beispielsweise in Form von Platten, bei denen die Fasern im wesentlichen parallel zu den großen Oberflächen verlaufen, oder in Form von Lamellen, bei denen die Fasern überwiegend senkrecht zu den Oberflächen orientiert sind, oder in Form von Lamellenplatten-Segmenten und ähnlichen Formkörpern auf die Außenwände von Gebäuden aufgeklebt und/oder mit Dübelankern gehalten. Der nachfolgend verwendete Begriff der Mineralwolle-Formkörper soll also für alle die zuvor aufgeführten Formkörperarten gelten. Dem Bestimmungszweck entsprechend werden diese Formkörper auch als Putzträger bezeichnet. Bekannt ist, auf die äußere Oberfläche dieser Putzträger entweder zweischichtige Mineralputze nach DIN 18550 oder Kunstharzputze nach DIN 18558 aufzubringen. Bei beiden Putzarten wird die erste Putz lage mit einem Glasseidengittergewebe oder Streckmetall oder Stahlgittergewebe und dergleichen armiert. Die Kombination Mineralwolle-Formkörper als Putzträger und Putz wird landläufig als Wärmedämm-Verbundsystem bezeichnet. Sowohl bei diesen Wärmedämm-Verbundsystemen, die ohne zusätzliche Dübelverankerung auf der Außenwand eines Gebäudes angeklebt werden, als auch bei anderen Wärmedämmsystemen, bei denen eine Dübelverankerung der ersten Lage des Systems vorgenommen wird, spielt die dauerhafte Verankerung bzw. Verbindung mit dem Mineralwolle-Formkörper eine besondere Rolle.

Man kann nun zwar die Haftung der Formkörper auf der Gebäudeaußenwand durch eine bauseitige Grundierung der Außenwandfläche mit lösungsmittelhaltigen Kunststoffen oder Kunststoffdispersionen begünstigen, jedoch hat der Einsatz dieser Materialien den Nachteil, daß einmal eine Erhöhung des Widerstandes gegenüber Wasserdampfdiffusion bis hin zur vollständigen Sperrung erfolgen kann und daß zum anderen durch das Eindringen organischer Substanzen die an sich vorhandene Nichtbrennbarkeit sowohl des Dämmstoffs als auch des gesamten Wärmedämm-Verbundsystems in Frage gestellt wird. Vor allem unter dem Gesichtspunkt der Nichtbrennbarkeit und auch der Dauerhaftigkeit werden deshalb handelsübliche Baukleber auf der Basis von hydraulisch erhärteten Silikaten, wie Portland-Zement, Tonerdeschmelz-Zement und sonstigen latent hydraulischen Stoffen eingesetzt. Diesen Klebern wird ähnlich wie den außenseitig aufgebrachten Putzen ein gewisser Anteil an Kunststoffen zugesetzt. Der normale Portland-Zement hat aber einen mittleren Korndurchmesser von etwa 32 µm. Die latent hydraulischen Zuschläge, insbesondere aber die Zuschläge der Putze und der Baukleber, weisen jedoch noch größere Abmessungen auf. Die Mineralwolle-Formkörper bestehen aus Fasern mit einem mittleren Durchmesser von 4 bis 5 µm, und die Rohdichten der Formkörper liegen in der Größenordnung von 100 kg/m³ bis 150 kg/m³. Obwohl bei diesen faserigen Haufwerken die offene Porösität 87 bis etwa 96 Volumen-% beträgt, sind die Abstände zwischen den einzelnen Fasern mit < 20 µm gering. Da es sich um ein dreidimensionales Haufwerk handelt, ergibt sich auch ein Filtereffekt in der Tiefe.

Die Zementpartikel bzw. Zementkörner können deshalb nicht von selbst in die Mineralwolle- bzw. Steinwolle-Formkörper eindringen und somit die notwendig feste Verbindung herstellen. Hinzu kommt noch, daß infolge der fehlenden kapillaren Saugfähigkeit des Mineralwolle-Formkörpers keine äußeren Druckkräfte wirksam werden. Aber selbst bei Anlegen eines von außen wirkenden statischen Überdrucks wird die Festigkeit der Verbindung nicht erhöht, weil durch die Kompression des Mineralwolle-Formkörpers die Abstände zwischen den Fasern weiter verringert werden und damit die mittlere Porenweite des Filters reduziert wird.

Ein weiterer Aspekt besteht darin, daß durch das vorherige Aufbringen des hydraulischen Bindemittels in dünner Schicht eine korrodierende Wirkung der bei der Hydratation freiwerdenden Basen auf die Steinwollefasern vermieden wird, da der freie Kalk durch Aufnahme von CO₂ innerhalb kurzer Zeit neutralisiert wird.

Aus der US-A 4 841 705 sind bereits Mineralwolle-Formkörper zur Wärme- und Schalldämmung von Gebäudeaußenwänden bekannt, welche zur Befestigung an der Gebäudeaußenwand einerseits und als Putzträger andererseits bestimmt sind, wobei auch offenbart ist, daß Zement in mindestens eine Formkörper-Oberflächenschicht eingebracht werden kann. Es wird dem Fachmann jedoch die Lehre erteilt, die Zementschicht nicht unmittelbar auf die Mineralwolle-Formkörper aufzubringen, sondern eine Matte zwischenzuschalten, welche aus einem Gewirr oder Gewirke von vorzugsweise Nylon-Fasern besteht. Diese Matte wird zusammen mit dem Mineralwolle-Formkörper mittels mechanischen Haltern auf der Gebäudeaußenwand befestigt. Der Zement, der, um spätere Haarrisse zu vermeiden, vorzugsweise mit Glasfasern verstärkt ist, wird so dünnflüssig gewählt, daß er in die Zwischenräume zwischen den Mattenfasern eindringen kann.

Ferner ist aus der EP-A-0 251 544 ein durch Kohlefasern verstärktes Zementprodukt bekannt, und zwar wird ein gewebeartiges Gebilde aus Kohlefasern beispielsweise in einem Bad aus mit Wasser aufbereitetem Zement vollständig durchtränkt. Dabei ist der Zement so feinkörnig aufbereitet, daß die mittlere Korngröße des Zementes kleiner als der mittlere Durchmesser der Kohlefasern ist. Kohlefasern sind dafür bekannt, daß sie eine hohe Zugfestigkeit, aber nur eine geringe Biege- bzw. Knickfestigkeit aufweisen. Um die hohe Zugfestigkeit der Kohlefasern als Verstärkungsmittel in dem Zementerzeugnis nutzen zu können und gleichzeitig ein Biegen und Brechen der Kohlefasern zu vermeiden, werden die Kohlefasern vollständig von den Zementteilchen umgeben und die Lücken zwischen den Kohlefasern durch Zement ausgefüllt. Im Endergebnis wird ein Zementprodukt erhalten, in dem der Anteil an Kohlefasern bevorzugt zwischen etwa 5 bis 30 Volumen-% liegt. Der Fachmann erhält dabei die Weisung, den Anteil an Kohlefasern nicht höher als 30 % zu wählen, weil dann die Zwischenräume zwischen den Kohlefasern zu schmal werden, um die Zwischenräume mit Zementteilchen auszufüllen. Diese kohlefaserverstärkten Zementprodukte können zum Beispiel als Verkleidungsplatten an Wänden oder als Dachplatten ausgebildet sein. Als Vorteil wird herausgestellt, daß diese Zementprodukte wegen ihrer hohen Festigkeitseigenschaften sehr dünn ausgeführt werden können und daß aus diesem Grunde eine hohe Wärmeleitfähigkeit erreicht werden kann. Schon allein wegen des hohen Zementanteiles sind diese bekannten Produkte zur Wärme- und Schalldämmung nicht geeignet.

Der Erfindung liegt die Aufgabe zugrunde, die Haftung des auf einen Mineralwolle-Formkörper aufzubringenden Putzes zu verbessern.

Die gestellte Aufgabe wird dadurch gelöst, daß ein mikrofeiner mit Wasser aufbereiteter Zement mit einer mittleren Korngröße von etwa 2 µm bis 3 µm, die kleiner als die mittlere Porengröße zwischen den Mineralfasern ist und mit einem geringen Anteil von weniger als 0,5 Masse-% an Tensiden in mindestens eine Formkörper-Oberflächenschicht eingebracht ist.

Auf diese Weise wird der wesentliche Vorteil erzielt, daß der Zement in eine Oberflächenschicht mit einer vergleichsweise größeren Tiefe eingebracht werden kann und daß die Oberflächenschicht des Mineralwolle-Formkörpers eine sehr gute Affinität zu Bauklebern, Mörteln und Putzsystemen aufweist. Durch den geringen Anteil von weniger als 0,5 Masse-% an Tensiden wird erreicht, daß die Oberflächenspannung des Wassers auf den Zementkörnern einerseits und den Mineralfasern andererseits reduziert wird. Dies wird in der Weise vorgenommen, daß im späteren Verbund mit dem Baukleber oder dem Putzsystem die hydrophoben Eigenschaften der Mineralwolle-Formkörper nicht beeinträchtigt werden.

Als Tenside werden vorteilhafterweise Polyglykoläther, Alkylnaphthalinsulfonate oder Ligninsulfonat gewählt.

Vorteilhafterweise wird als Mineralwolle Steinwolle und als Zement an sich bekannter Portlandzement, jedoch, wie gesagt, mit mikrofeinen Korndurchmessern gewählt.

Die Erfindung betrifft ferner ein Verfahren zur Herstellung einer Wärme- und/oder Schalldämmung aus Mineralwolle mit einer Rohdichte von 100 kg/m³ bis 150 kg/m³ und mit einer offenen Porösität von 87 Volumen-% bis 96 Volumen-% auf einer Gebäudeaußenwand, gekennzeichet durch folgende Verfahrensschritte:
a) Einbringen eines mikrofeinen mit Wasser aufbereiteten Zements mit einer mittleren Korngröße von 2 µm bis 3 µm unter Zugabe eines geringen Anteils von weniger als 0,5 Masse-% an Tensiden in mindestens eine Oberflächenschicht eines Mineralwolle-Formkörpers, wobei die mittlere Korngröße des Zements kleiner ist als die mittlere Porengröße zwischen den Mineralfasern der Mineralwolle,
b) Aushärtenlassen des Zements,
c) Befestigen des Mineralwolle-Formkörpers auf der Gebäudeaußenwand,
d) direktes Aufbringen eines Putzes auf die zementverstärkte Oberflächenschicht des Mineralwolle-Formkörpers.

Eine Verbesserung dieses Verfahrens wird dadurch erreicht, daß in beide einander gegenüberliegende große Oberflächenschichten des Mineralwolle-Formkörpers der mikrofeine Zement eingebracht wird, und daß nach dem Aushärten des Zements der Formkörper mittels eines Klebers oder Mörtels unmittelbar auf der Gebäudeaußenwand befestigt wird.

Eine weitere Ausgestaltung des erfindungsgemäßen Verfahrens besteht darin, daß die Oberflächenschicht des Formkörpers vor dem Erstarren und Aushärten des Zements einer nachgeschalteten intensiven Reibbewegung unterworfen wird, derart, daß die Zementkörner möglichst gleichmäßig in der Oberflächenschicht verteilt werden.

Zum allgemeinen Verständnis der Erfindung dienen noch die folgenden Erläuterungen.

Durch die Verwendung eines mikrofeinen Portlandzements mit mittleren Korndurchmessern bzw. Korngrößen von 2 Mikrometer bis 3 Mikrometer, die also unter den mittleren vergleichbaren Porendurchmessern bzw. Porengrößen der Fasermasse liegen, gelingt es, daß die wirksamen Teilchen des Zements in die Oberfläche der Fasermasse eindringen. Es versteht sich, daß der Portlandzement entsprechend mit Wasser aufbereitet wird. Verstärkt wird dieser Effekt des Eindringens durch den Zuschlag von sehr geringen Anteilen von oberflächenaktiven, zementspezifischen Substanzen, welche die Oberflächenspannung des Wassers auf den Zementkörnern einerseits und in der Wechselwirkung auf den Mineralfasern andererseits reduzieren. Durch eine nachgeschaltete intensive Reibbewegung der jeweiligen Oberflächenschicht werden die Zementteilchen zudem noch wirksam in der Oberflächenschicht der Fasermasse verteilt. Auf diese Weise lassen sich mit dem an und für sich spröd-harten hydraulischen Zement-Verstärkungsmittel, das gleichzeitig aber auch als zusätzliches Bindemittel wirkt, verhältnismäßig dünne und für die Verarbeitung flexible, bzw. biegsame Oberflächen der Mineralwolle-Formkörper erzielen.

Durch die intensive Reibbewegung ergibt sich der weitere Vorteil, daß dadurch eine Vielzahl von Fasern aus ihrer ursprünglich parallel zu den behandelten Oberflächen gerichteten Orientierung in eine mehr oder weniger steile Orientierung senkrecht zu den Oberflächen gebracht werden, was die Haftung des später aufzubringenden Wärmedämm-Verbundsystems bzw. des Grundputzes verbessert.

Das besondere aber für die Weiterverarbeitung ist darin zu sehen, daß die Oberflächen der Mineralwolle-Formkörper, insbesondere der Steinwolle-Formkörper, nun eine sehr gute Affinität zu den zu Anfang erläuterten Bauklebern, Mörteln und Putzsystemen aufweisen. Diese Eigenschaften sichern eine gute Adhäsion auf dem jeweiligen Mineralwolle-Formkörper und stellen die Basis für eine dauerhaft sichere Verbindung auf demselben dar, wahlweise also in Verbindung mit der betreffenden Gebäudeaußenwand und dem aufzutragenden Putz.

Es sei ferner hervorgehoben, daß sich der Mineralwolle-Formkörper auf der Baustelle mit dem dort üblichen Handwerkszeug, wie Messer, Handsäge usw. auf die notwendigen Formen zuschneiden lassen muß. Als wesentliche Orientierungshilfe bei der Dimensionierung der Mineralwolle-Formkörper kann der Zement schichtweise in mindestens zwei Arbeitsgängen aufgebracht werden. Die einzelnen Zementschichten können vorteilhafterweise durch mineralische Farbpigmente oder zementbeständige Zusätze farblich unterschieden werden. Der Auftrag mindestens einer eingefärbten Zementschicht erfolgt raster- oder linienförmig, wobei sich die Linien auch aus einzelnen Punkten oder Punkt-Strich-Kombinationen zusammensetzen können.

## Patentansprüche

1. Mineralwolle-Formkörper zur Wärme- und Schalldämmung von Gebäudeaußenwänden, der zur Befestigung an der Gebäudeaußenwand einerseits und als Putzträger für die Aufnahme eines Außenputzes andererseits bestimmt ist und welcher eine Rohdichte von etwa 100 kg/m³ bis 150 kg/m³ und eine offene Porösität von etwa 87 Volumen-% bis 96 Volumen-% aufweist, dadurch gekennzeichnet, daß ein mikrofeiner mit Wasser aufbereiteter Zement mit einer mittleren Korngröße von etwa 2 µm bis 3 µm, die kleiner als die mittlere Porengröße zwischen den Mineralfasern ist und mit einem geringen Anteil von weniger als 0,5 Masse-% an Tensiden in mindestens eine Formkörper-Oberflächenschicht eingebracht ist.

2. Mineralwolle-Formkörper nach Anspruch 3, dadurch gekennzeichnet, daß als Tenside Polyglykoläther, Alkylnaphthalinsulfonate oder Ligninsulfonat gewählt sind.

3. Mineralwolle-Formkörper nach Anspruch 1 oder 2, dadurch gekennzeichnet, daß als Mineralwolle Steinwolle und als Zement Portlandzement gewählt sind.

4. Verfahren zur Herstellung einer Wärme- und/oder Schalldämmung aus Mineralwolle mit einer Rohdichte von etwa 100 kg/m³ bis 150 kg/m³ und mit einer offenen Porösität von 87 Volumen-% bis 96 Volumen-% auf einer Gebäudeaußenwand, gekennzeichnet durch folgende Verfahrensschritte:
a) Einbringen eines mikrofeinen mit Wasser aufbereiteten Zements mit einer mittleren Korngröße von 2 µm bis 3 µm unter Zugabe eines geringen Anteils von weniger als 0,5 Masse-% an Tensiden in mindestens eine Oberflächenschicht eines Mineralwolle-Formkörpers, wobei die mittlere Korngröße des Zements kleiner ist als die mittlere Porengröße zwischen den Mineralfasern der Mineralwolle,
b) Aushärtenlassen des Zements,
c) Befestigen des Mineralwolle-Formkörpers auf der Gebäudeaußenwand,
d) direktes Aufbringen eines Putzes auf die zementverstärkte Oberflächenschicht des Mineralwolle-Formkörpers.

5. Verfahren nach Anspruch 4, dadurch gekennzeichnet, daß in beide einander gegenüberliegende großen Oberflächenschichten des Mineralwolle-Formkörpers der mikrofeine Zement mit den zugegebenen Tensiden eingebracht wird, und daß nach dem Aushärten des Zements der Formkörper mittels eines Klebers oder Mörtels unmittelbar auf der Gebäudeaußenwand befestigt wird.

6. Verfahren nach Anspruch 6 oder 7, dadurch gekennzeichnet, daß die Oberflächenschicht des Formkörpers vor dem Erstarren und Aushärten des Zements einer nachgeschalteten intensiven Reibbewegung unterworfen wird, derart, daß die Zementkörner gleichmäßig in der Oberflächenschicht verteilt werden.

7. Verfahren nach einem der Ansprüche 4 bis 6, dadurch gekennzeichnet, daß der Zement in zwei oder mehreren Arbeitsgängen schichtweise aufgebracht wird.

8. Verfahren nach Anspruch 7, dadurch gekennzeichnet, daß die einzelnen Zementschichten zur farblichen Unterscheidung mit mineralischen Farbpigmenten oder zementbeständigen Zusätzen versehen werden.

## Claims

1. Mineral wool moulding for insulation of building outwalls against the loss of heat and for their sound insulation, which moulding is intended for being fixed to the building outwall on one hand and as a plaster base for receiving the outside plaster on the other hand and which has an apparent density of approximately 100 kg/m³ to 150 kg/m³ and an open porosity of approximately 87 %-volume to 96 %-volume, characterized in that a microfine cement prepared with water and having a medium grain size of approximately 2 µm to 3 µm, which is smaller than the medium pore size between the mineral fibres, and including a small proportion of less than 0.5 %-weight of tensides is brought into at least one surface layer of the moulding.

2. Mineral wool moulding according to claim 1, characterized in that polyglycolether, alkylnaphtalenesulphonates or ligninsulphonate are chosen for the tensides.

3. Mineral wool moulding according to claim 1 or 2, characterized in that rockwool is chosen for the mineral wool and Portland cement for the cement.

4. Method of producing an insulation against the loss of heat and/or a sound insulation from mineral wool having an apparent density of approximately 100 kg/m³ to 150 kg/m³ and an open porosity of 87 %-volume to 96 %-volume on the outwall of a building, characterized by the following steps:
a) bringing microfine cement prepared with water and having a medium grain size of 2 µm to 3 µm, under the addition of a small proportion of less than 0.5 %-weight of tensides, into at least one surface layer of the mineral wool moulding, the medium grain size of the cement being smaller than the medium pore size between the mineral fibres of the mineral wool,
b) allowing the cement to cure,
c) fixing the mineral wool moulding onto the building outwall,
d) directly applying a plaster onto the cement-reinforced surface layer of the mineral wool moulding.

5. Method according to claim 4, characterized in that the microfine cement with the tensides added is brought into both mutually opposite large surface layers of the mineral wool moulding, and that after curing of the cement the moulding is directly fixed onto the building outwall by means of an adhesive or mortar.

6. Method according to claim 6 or 7, characterized in that the surface layer of the moulding is, after solidification and curing of the cement, subject to a subsequent intensive frictional motion so that the cement grains are uniformly distributed within the surface layer.

7. Method according to any one of the claims 4 to 6, characterized in that the cement is applied in layers in two or more working steps.

8. Method according to claim 7, characterized in that the individual layers, for colour discrimination, are provided with mineral colour pigments or cement-resistant additives.

## Revendications

1. Corps moulé en laine minérale pour l'isolation thermique et acoustique de murs extérieurs de bâtiments, qui est destiné à être fixé au mur extérieur d'un bâtiment d'une part et comme support de crépi pour recevoir un crépi extérieur d'autre part, et qui présente une masse volumique apparente d'environ 100 à 150 kg/m³ et une porosité ouverte d'environ 87 à 96 % en volume, caractérisé en ce qu'un ciment microfin préparé avec de l'eau avec une grosseur de grain moyenne d'environ 2 µm à 3µm, qui est inférieure à la grandeur moyenne des pores entre les fibres minérales, et avec un faible taux de tensides de moins de 0,5 % en masse est introduit dans au moins une couche de surface du corps moulé.

2. Corps moulé en laine minérale selon la revendication 1, caractérisé en ce que, comme tensides, on choisit du polyglycoléther, des alkylnaphtalènesulfonates ou du sulfonate de lignine.

3. Corps moulé en laine minérale selon la revendication 1 ou 2, caractérisé en ce qu'on choisit de la laine de roche comme laine minérale et du ciment Portland comme ciment.

4. Procédé pour la fabrication d'une isolation thermique et/ou acoustique en laine minérale avec une masse volumique apparente d'environ 100 à 150 kg/m³ et une porosité ouverte d'environ 87 à 96 % en volume sur un mur extérieur de bâtiment, caractérisé par les étapes de procédé suivantes :
a) Introduire un ciment microfin préparé avec de l'eau avec une grosseur de grain moyenne d'environ 2 µm à 3 µm en ajoutant un faible taux de tensides de moins de 0,5 % en masse dans au moins une couche de surface d'un corps moulé en laine minérale, la grosseur de grain moyenne du ciment étant inférieure à la grandeur moyenne des pores entre les fibres minérales de la laine minérale,
b) Faire durcir le ciment,
c) Fixer le corps moulé en laine minérale sur le mur extérieur du bâtiment,
d) Appliquer directement un crépi sur la couche de surface renforcée en ciment du corps moulé en laine minérale.

5. Procédé selon la revendication 4, caractérisé en ce que le ciment microfin est introduit avec les tensides ajoutés dans deux grandes couches de surface du corps moulé en laine minérale situées l'une en face de l'autre et qu'après le durcissement du ciment le corps moulé est fixé directement sur le mur extérieur du bâtiment à l'aide d'une colle ou d'un mortier.

6. Procédé selon la revendication 6 ou 7, caractérisé en ce que la couche de surface du corps moulé est soumise, avant la solidification et le durcissement complet du ciment, à un mouvement de friction intensif en aval de telle manière que les grains de ciment sont répartis uniformément dans la couche de surface.

7. Procédé selon l'une des revendications 4 à 6, caractérisé en ce que le ciment est appliqué couche par couche en deux opérations ou plus.

8. Procédé selon la revendication 7, caractérisé en ce que les différentes couches de ciment sont pourvues de pigments de couleur minéraux ou d'additifs résistants au ciment pour une distinction par la couleur.
